(19) Europäisches Patentamt
European Patent Office
Office européen des brevets

(11) **EP 2 848 467 B1**

(12) **EUROPÄISCHE PATENTSCHRIFT**

(45) Veröffentlichungstag und Bekanntmachung des Hinweises auf die Patenterteilung:
**14.08.2019  Patentblatt 2019/33**

(51) Int Cl.:
***B60P 3/025*** *(2006.01)*

(21) Anmeldenummer: **14003167.5**

(22) Anmeldetag: **12.09.2014**

(54) **Mobile Schowbühne**

Mobile show stage

Podium mobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2013  DE 102013015102**

(43) Veröffentlichungstag der Anmeldung:
**18.03.2015  Patentblatt 2015/12**

(73) Patentinhaber: **Wagner, Werner**
**91619 Obernzenn (DE)**

(72) Erfinder: **Wagner, Werner**
**91619 Obernzenn (DE)**

(74) Vertreter: **Küchler, Stefan**
**Patentanwalt**
**Färberstrasse 20**
**90402 Nürnberg (DE)**

(56) Entgegenhaltungen:
**DE-C1- 741 814      DE-U- 7 300 136**
**FR-A1- 2 646 816**

# EP 2 848 467 B1

**Beschreibung**

Die Erfindung richtet sich auf eine mobile Showbühne, mit wenigstens einem von der Ladefläche eines Fahrzeugs, insbesondere eines Anhängers, seitlich als Bühne über wenigstens einen Seilzug herabklappbaren Wand. Eine solche Showbühne ist aus der DE 73 00 136 U bekannt.

Mobile Showbühnen erfreuen sich steigender Beliebtheit. Denn bei vielen Festen - Stadt- und Dorffeste, Kerwa-Feiern, Faschingsveranstaltungen im Freien - gibt es nicht selten musikalische oder sonstige künstlerische Darbietungen, wobei sich die betreffenden Künstler auf einer Bühne für jedermann sichtbar präsentieren.

Sofern die jeweilige Veranstaltung unter freiem Himmel stattfindet, wird dabei häufig zumindest eine zumindest teilweise überdachte Bühne verwendet, um die Künstler vor den Unbilden des Wetters zu schützen. In diesem Falle empfiehlt es sich, eine mobile Showbühne zu verwenden, die durch Herabklappen wenigstens einer Seitenwand von einem überdachten Anhänger oder sonstigen Fahrzeug entsteht, dessen Dach zumindest den rückwärtigen Teil der Bühne überdeckt.

Dabei haben allerdings bei größeren, derartigen Showbühnen herabklappbare Seitenwände ein nicht unbeträchtliches Gewicht und können daher nicht mehr einfach durch Muskelkraft herabgeschwenkt werden. Aus diesem Grund sind auch bereits Seilzüge und/oder Zylinder für eine automatische Betätigung vorgeschlagen worden.

Dabei ist allerdings zu bedenken, dass während des Herabschwenkens, also solange die betreffende Wand nch nicht auf unterstellten oder ausgeschwenkten Standfüßen ruht, ein nicht unbeträchtliches Kippmoment auf diese einwirkt, das von der Schwenkeinrichtung aufgenommen werden muss. Dabei stellt eine derartige, hochgradig asymmetrische Belastung für jede Schwenkmechanik eine Herausforderung dar. Es ist deshalb üblich, an einer solchen mobilen Showbühne zwei Ladebordwände oder sonstige Seitenwände stets an beiden Seiten der Ladefläche synchron herabzuklappen, wobei sich dann die auf diese beiden Seitenwände einwirkenden Kippmomente zumindest hinsichtlich ihrer Kraftkomponenten in horizontaler Richtung gegenseitig kompensieren und eine Schwenkmechanik insgesamt nur eine vertikale Gesamtkraft aufbringen muss.

Obzwar diese Maßnahme zu beherrschbaren Kräften führt, ist sie für die Praxis häufig unerwünscht, weil das gleichzeitige Herausklappen zweier Seitenwände eine weitaus größere Standfläche erfordert als das in den meisten Fällen ausreichende, einseitige Herabklappen nur einer Seitenwand. Manchmal, beispielsweise in der Fußgängerzone einer engen, mittelalterlichen Stadt ist es gar unmöglich, einen solch großen Standplatz zu finden.

Aus den Nachteilen des Standes der Technik resultiert das die Erfindung initiierende Problem, eine mobile Showbühne zu entwickeln, wobei mit geringem Aufwand eine Wand einer Ladefläche herabgeklappt werden kann. Dabei soll insbesondere die von der Showbühne benötigte Standfläche nicht größer sein als unbedingt erforderlich.

Die Lösung dieses Problems gelingt bei einer mobilen Showbühne, mit wenigstens einem von der Ladefläche eines Fahrzeugs, insbesondere eines Anhängers, seitlich als Bühne mittels Seilzügen herabklappbaren Wand, durch folgende Merkmale:

a) vor und/oder hinter der Ladefläche des betreffenden Fahrzeugs oder Anhängers, insbesondere im Bereich einer Vorder- und/oder Rückwand der Ladefläche, ist wenigstens je eine Vertikalverstelleinrichtung vorgesehen, die einerseits am Chassis des Fahrzeugs abgestützt ist und andererseits mit einem etwa horizontal verlaufenden Balken etwa in dessen horizontaler Mitte zu dessen Vertikalverstellung gekoppelt ist;

b) an jedem vertikal verstellbaren Horizontalbalken ist jeweils wenigstens eine Flaschenzug-Umlenkrolle vorgesehen;

c) um an einem vertikal verstellbaren Horizontalbalken angelenkte Flaschenzug-Umlenkrollen sind ausschließlich Trume eines oder mehrerer solcher Seilzüge geschlungen, dessen freies Ende oder deren freie Enden an einer einzigen, herabklappbaren Wand angeschlossen ist oder sind.

Dadurch kann ein horizontal ausgerichteter Balken im Gleichgewicht gehalten werden, ohne dass dazu verschiedenen, herabklappbaren Wänden zugeordnete Seilzüge an den selben Balken angekoppelt werden müssten. Daher kann ein einziger Zylinder in der Mitte des betreffenden Balkens bzw. auf dessen vertikaler Symmetriachse verwendet werden, und dennoch ist eine gleichbleibende Horizontalausrichtung des Balkens während der Hubbewegung gewährleistet. Man erhält dadurch eine sehr einfache Konstruktion, ohne dass dadurch beide Wände gleichzeitig heraboder hochgeklappt werden müssten.

Es hat sich bewährt, dass eine, mehrere und/oder alle Vertikalverstelleinrichtungen jeweils einen Hydraulikzylinder umfassen. Insbesondere doppelt wirkende Hydraulikzylinder sind im vorliegenden Anwendungsfall wohl meistens einfacher einzusetzen als elektrische Antriebe. Dadurch lassen sich mit geringem Konstruktionsaufwand große Kräfte an verschiedenen Stellen eines Fahrzeugs erzeugen; insbesondere bedarf eine Hydraulik wohl nur einer einzigen Hydraulikpumpe als aktivem Element; deren Leistung kann dann je nach gewünschter Aktion an verschiedene Hydraulikzylinder weitergeleitet werden.

Eine besonders platzsparende Anordnung erhält man dadurch, dass die Kolbenstangen eines, mehrerer und/oder aller Hydraulikzylinder jeweils vertikal verlaufen. Im Bereich der Vorder- und/oder Rückwand eines Fahrzeugs können dieselben innerhlb einer doppelwandigen Konstruktion verborgen werden - insbesondere auch vor unerwünschten Manipulationen durch Dritte.

Indem für einen, mehrere und/oder alle Hydraulikzylinder nur eine einzige Hydraulikpumpe vorgesehen ist, lässt sich der konstruktive Aufwand minimieren. Durch ein oder mehrere Hydraulikventile wird die Leistung der Hydraulikpumpe dann an verschiedene Kammern bestimmter Hydraulikzylinder weitergegeben, um jeweils immer die gewünschte Aktion auszuführen.

Die Erfindung sieht ferner vor, dass sich vor und/oder hinter der Ladefläche des betreffenden Fahrzeugs oder Anhängers, insbesondere im Bereich der Vorder- und/oder Rückwand der Ladefläche, in der Nähe einer oder vorzugsweise jeder Seitenwand am Chassis des Fahrzeugs je eine Umlenkrolle für den betreffenden Seilzug befindet. Besonders bevorzugt lassen sich diese Umlenkrollen etwa auf der dortigen Höhe der Oberkante der herabklappbaren Wände in hochgeklapptem Zustand anordnen und/oder etwa auf Höhe der ortsfesten Umlenkrollen der Flaschenzüge. Die betreffende Umlenkrolle muss oder sollte selbst nicht Bestandteil eines Flaschenzugs sein, sondern dient vor allem einer reibungsfreien Führung des Zugmittels im Bereich der Vorder- oder Rückwand des betreffenden Fahrzeugs oder Anhängers. Eine besonders einfache Konstruktion ergibt sich, wenn sich der Verankerungs- oder Anlenkpunkt eines Seilzugs an einer herabklappbaren Wand in deren hochgeklapptem Zustand, die ortsfesten Umlenkrollen des betreffenden Flaschenzugs und die dazwischen angeordnete, nicht dem Flaschenzug angehörende Umlenkrolle allesamt auf einer gemeinsamen Geraden befinden, und/oder auf der selben Höhe.

Für jeden Seilzug sollte je ein eigener Flaschenzug vorgesehen sein, umfassend eine oder mehrere, am Chassis des Fahrzeugs fest verankerte Umlenkrollen sowie mehrere, an dem horizontal verlaufende Balken demgegenüber insbesondere in vertikaler Richtung verstellbar gelagerte Umlenkrollen. Dadurch können die Kräfteverhältnisse in den verschiedenen Seilzügen vollständig voneinander entkoppelt werden.

Andererseits empfiehlt die Erfindung, dass pro herabklappbarer Seitenwand zwei Seilzüge vorgesehen werden sollten. Einer von diesen sollte im Bereich der in Fahrtrichtung vorderen Kante, insbesondere an oder nahe oder unterhalb der vorderen oberen Ecke mit der herabklappbaren Seitenwand verbunden sein, der andere im Bereich der in Fahrtrichtung rückwärtigen Kante, insbesondere an oder nahe oder unterhalb hinteren oberen Ecke dieser Seitenwand. Dank einer solchen Konstruktion können Verbiegungen oder Verwindungen innerhalb der betreffenden Seitenwand vermieden werden.

Die Klappscharniere zwischen einer herabklappbaren Seitenwand und dem Fahrzeugchassis können sich vorzugsweise auf die gesamte Länge des Fahrzeugs verteilen, sollten aber insbesondere auch wenigstens je einmal an der vordere und hinteren unteren Ecke vorhanden sein. Damit wird die herabklappbare Wand im Moment des Herabklappens stets im Bereich aller vier Ecken, zumindest aber im oberen Bereich ihrer Vorder- und Hinterkante unterstützt und wird also nicht auf Biegung beansprucht.

Dabei sollte allerdings ein synchroner Gleichlauf zweier der selben Klappwand zugeordneter Seilzüge sichergestellt sein. Dies kann bspw. durch steuertechnische Maßnahmen erreicht werden oder durch eine mechanische Kopplung zwischen den beiden Seilzug-Mechaniken.

Es hat sich bewährt, für jeden Flaschenzug jeweils wenigstens drei Trume vorzusehen, vorzugsweise jeweils wenigstens deren vier oder gar mehr als vier. Diese Konstruktionsvorschrift resultiert aus folgenden Erwägungen: Wenn obere ortsfeste Umlenkrollen an dem Chassis nahe der betreffenden Seitenwand zu dem Boden der Ladefläche etwa den selben Abstand a aufweisen wie die Anlenkpunkte eines Seilzugs von der unteren, mit Scharnieren versehenen Kante der betreffenden Seitenwand, so hat das Trum des Seilzugs zwischen der betreffenden ortsfesten Umlenkrolle am Chassis und dem Anlenkpunkt an der betreffenden Seitenwand bei hochgeschwenkter Seitenwand etwa die Länge null, bei herabgeschwenkter Seitenwand dagegen etwa die Länge $s = a * 2^{\frac{1}{2}}$. Die Differenz $\Delta s = a * 2^{\frac{1}{2}}$ muss also von dem Flaschenzug durch dessen Längenverstellung $\Delta f$ erzeugt werden, wenn sich der betreffende Hydraulikzylinder zwischen seinen maximalen Verstellpositionen bewegt. Dies kann höchstens die halbe Länge des Zylinders in voll ausgefahrenem Zustand sein. Bei aufrechtstehenden Zylindern ist diese Maximallänge höchstens gleich oder kleiner als a, wenn sich die ortsfesten Umlenkrollen etwa auf Höhe der oberen Flaschenzug-Umlenkrollen befinden. Damit ergibt sich die maximale Längenverstellung des Flaschenzugs zu $\Delta f = a/2$. Es gilt also:

$$\Delta s/\Delta f = a * 2^{\frac{1}{2}} / a/2 = 2 * 2^{\frac{1}{2}} \approx 2 * 1,4 = 2,8.$$

Die Mindestzahl von Trumen des Flaschenzugs muss also größer sein als 2,8.

Weitere Vorzüge erfährt die Erfindung dadurch, dass ein, mehrere oder alle Trume eines Seilzugs im Bereich eines Flaschenzugs parallel zueinander verlaufen, insbesondere in vertikaler Richtung. Hierdurch ergeben sich einfache, leicht berechenbare Kraftverhältnisse.

Die Anordnung kann ferner derart gestaltet werden, dass sich die Richtung eines oder mehrerer oder aller Trume eines Seilzugs im Bereich eines Flaschenzugs bei einer Hub- oder Senkbewegung verändert. Damit lässt sich eine Nichtlinearität im Übertragungsverhalten einbauen, entsprechend einer Vorverzerrung, welche den nichtlinearen Verlauf des Wand-Schwerpunktes beim Herabschwenken berücksichtigen, denn im ersten Moment des Herabschwenkens ändert sich die Höhe des Wandschwerpunktes so gut wie gar nicht, in der Nähe der horizontalen Position der Wand dagegen maximal.

Die Erfindung lässt sich dahingehend weiterbilden, dass an einem etwa horizontal verlaufenden, vertikal verstellbaren Balken mehrere bewegliche Umlenkrollen desselben Seilzugs nebeneinander angeordnet sind. Diese werden solchermaßen gemeinsam verstellt, wodurch sich die Anordnung des Flaschenzugs konstruktiv vereinfacht.

Die Erfindung empfiehlt, dass die beweglich gelagerten Umlenkrollen desselben Seilzugs an einem etwa horizontal verlaufenden, vertikal verstellbaren Balken zu beiden Seiten eines daran befestigten Anschlusses der Vertikalverstelleinrichtung oder des betreffenden Hydraulikzylinders gelagert sind. Damit können diese den Balken im Gleichgewicht halten ähnlich wie zwei Waagschalen den Balken einer Waage. Allerdings stehen die Kräfteverhältnisse im vorliegenden Fall wohl auf dem Kopf, falls sich die ortsfesten Umlenkrollen oberhalb der balkenseitigen Umlenkrollen befinden und also eine nach unten gerichtete Zugkraft aufgebracht werden muss, um durch Ziehen am Seil eine Wand hochzuklappen.

Es hat sich als günstig erwiesen, dass vor und/oder hinter der Ladefläche des betreffenden Fahrzeugs oder Anhängers, insbesondere im Bereich einer Vorder- und oder Rückwand der Ladefläche, wenigstens ein Flaschenzug vorgesehen ist, mit jeweils mehreren am Chassis des Fahrzeugs fest verankerten Umlenkrollen und mehreren demgegenüber beweglichen Umlenkrollen, wobei mehrere bewegliche Umlenkrollen desselben Seilzugs nebeneinander an einem gemeinsamen, etwa horizontalen Balken angeordnet sind zu beiden Seiten eines daran befestigten Anschlusses eines Hydraulikzylinders, dessen anderer Anschluss am Chassis des Fahrzeugs abgestützt ist, und vorzugsweise etwa symmetrisch zu diesem. Durch Aufteilung der Umlenkrollen auf beide Seiten eines solchen Horizontalbalkens halten sich die an diesen Umlenkrollen angreifenden Vertikalkräfte die Waage, und der daran gekoppelte Hydraulikzylinder muss also nur Vertikalkräfte aufbringen oder ableiten.

Es liegt im Rahmen der Erfindung, dass pro Vorder- oder Rückwand jeweils zwei etwa horizontal verlaufende, vertikal verstellbare, vorzugsweise gleich lange Balken angeordnet sind mit jeweils zwei oder mehr Umlenkrollen für einen Seilzug für je eine seitlich herabklappbare Wand. Die Länge dieser Balken ist jeweils kürzer als die halbe Breite des betreffenden Fahrzeugs oder Anhängers. Im Fall von beiderseits hoch- oder beiderseits herabgeklappten Wänden befinden sich diese Balken auf gleicher oder näherungsweise gleicher Höhe, insbesondere in einer gemeinsamen oder näherungsweise gemeinsamen Flucht. Allerdings erlaubt die physische Trennung zwischen diesen beiden Horizontalbalken eine unabhängige Vertikalverstellung der betreffenden Seitenwände.

Die Erfindung lässt sich dahingehend weiterbilden, dass pro Vorder- oder Rückwand jeweils zwei Hydraulikzylinder vorgesehen sind, in einer vertikalen Ebene quer zur Fahrtrichtung des betreffenden Fahrzeugs nebeneinander. Diese Hydraulikzylinder sollten unabhängig voneinander in jede beliebige Richtung antreibbar sein, um beide Wände unabhängig voneinander hoch- oder herabklappen zu können. Jedoch ist es möglich und ggf. sogar sinnvoll, die beiden Hydraulikzylinder gegeneinander zu verriegeln, so dass jeweils nur einer angetrieben werden kann, um solchenfalls die Hydraulikpumpe nicht zu überlasten.

Weitere Vorteile ergeben sich dadurch, dass der seitliche Abstand zwischen den Verankerungspunkten zweier in einer vertikalen Ebene quer zur Fahrtrichtung des betreffenden Fahrzeugs nebeneinander angeordneter Hydraulikzylinder am Chassis des Fahrzeugs gleich oder größer ist als die halbe Länge eines horizontal verlaufenden, vertikal verstellbaren Balkens, beispielsweise gleich oder größer als zwei Drittel der Länge eines horizontal verlaufenden, vertikal verstellbaren Balkens, vorzugsweise gleich oder größer als drei Viertel der Länge eines horizontal verlaufenden, vertikal verstellbaren Balkens, insbesondere gleich oder größer als die Länge eines horizontal verlaufenden, vertikal verstellbaren Balkens abzüglich des Außendurchmessers eines Hydraulikzylinders. Ddurch lässt sich eine optimal symmetrische Anordnung schaffen, welche im Idealfall sogar seitliche Parallelführungen für die Horizontalbalken entbehrlich werden lässt.

Einem ähnlichen Ziel dient eine erfindungsgemäße Bemessung, wonach der seitliche Abstand zwischen den Verankerungspunkten zweier in einer vertikalen Ebene quer zur Fahrtrichtung des betreffenden Fahrzeugs nebeneinander angeordneter Hydraulikzylinder am Chassis des Fahrzeugs gleich oder kleiner sein als das Anderthalbfache der Länge eines horizontal verlaufenden, vertikal verstellbaren Balkens, beispielsweise gleich oder kleiner als vier Drittel der Länge eines horizontal verlaufenden, vertikal verstellbaren Balkens, vorzugsweise gleich oder kleiner als fünf Viertel der Länge eines horizontal verlaufenden, vertikal verstellbaren Balkens, insbesondere gleich oder kleiner als die Länge eines horizontal verlaufenden, vertikal verstellbaren Balkens.

Eine besonders vorteilhafte Anordnung erhält man dadurch, dass zwei Hydraulikzylinder innerhalb einer vertikalen Ebene quer zur Fahrtrichtung parallel zueinander ausgerichtet sind. Eine solche Anbordnung ist einerseits platzsparend und andererseits insgesamt symmetrisch, so dass bspw. während der Fahrt eines solchen Fahrzeugs oder Anhängers optimale Fahrbedingungen herrschen.

In den Hydraulikkreislauf zweier innerhalb einer vertikalen Ebene quer zur Fahrtrichtung nebeneinander angeordneter Hydraulikzylinder sollte wenigstens je ein unabhängig steuerbares Ventil eingeschaltet sein. Damit kann jede der beiden Seitenwände getrennt von der anderen angehoben doer abgesenkt werden, je nachdem wie dies im konkreten Anwendungsfall gewünscht wird.

Die Erfindung lässt sich dahingehend weiterbilden, dass sich zwischen zwei innerhalb einer vertikalen Ebene quer zur Fahrtrichtung nebeneinander angeordneten Hydraulikzylindern keine Strebe des Fahrzeugchassis befindet.

Eine solche Strebe wäre nur störend, weil sie den Bewegungsspielraum der betreffenden, vertikal verstellbaren Horizontalbalken nur beeinträchtigen würde. Im Idealfall dieser Ausführugnsform befindet sich daher auf der vertikalen Längsmittelebene des Fahrzeugs oder Anhängers in dem unteren Bereich der vertikalen Verstellvorrichtung(en) weder eine Strebe noch ein Hydraulikzylinder, sondern mehr oder weniger nur Luft.

Eine abgewandelte Ausführungsform der Erfindung zeichnet sich dadurch aus, dass wenigstens ein Seilzug im Bereich des Dachs in oder entgegen der Fahrtrichtung von der Vorder- zur Rückwand des betreffenden Fahrzeugs oder Anhängers geführt ist, insbesondere entlang von Dachsparren des tragenden Gerüsts des Aufbaus. Hierbei handelt es sich um eine abgewandelte Ausführungsform, die mit insgesamt nur zwei Hydraulikzylindern auskommt, einem im Bereich der Vorderwand des betreffenden Fahrzeugs oder Anhängers, dem anderen im Bereich von dessen Rückwand. Dies ist möglich, wenn beide Seilzüge einer Seitenwand zu der betreffenden vertikalen Verstellvorrichtung geführt sind.

Deshalb entspricht es der Lehre der Erfindung, dass von zwei Seilzügen einer herabklappbaren Wand einer in oder entgegen der Fahrtrichtung von der Vorder- zur Rückwand des betreffenden Fahrzeugs oder Anhängers geführt ist, der andere dagegen nicht, und dass beide um Flaschenzug-Umlenkrollen eines gemeinsamen, horizontal verlaufenden, vertikal verstellbaren Balkens geschlungen sind. Während also ein Seilzug sich ohnehin bereits an oder nahe der betreffenden Vorder- oder Rückwand des Fahrzeugs oder Anhängers befindet, wird der andere Seilzug dorthin geführt.

Dazu bietet es sich an, den Seilzug im Bereich der Dachkonstruktion in Längs- bzw. Fahrtrichtung des Fahrzeugs oder Anhängers zu verlegen, wobei er seine Führung durch in Längsrichtung verlaufende Dachsparren oder durch daran festgelegte Führungselemente erhalten kann, ggf. in Verbindung mit Umlenkrollen im Bereich der Vorder- und/oder Rückwand des Fahrzeugs oder Anhängers, so dass eine leichtgängige Verstellung möglich ist.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1    eine zu einer Showbühne umbaubaren Anhänger im Transportzustand in einer perspektivischen Darstellung;

Fig. 2    die Showbühne nach Fig. 1 in ausgeklapptem Zustand;

Fig. 3    die Showbühne aus Fig. 2 nach dem Herausziehen des Zeltdaches;

Fig. 4    die Tragkonstruktion des Daches bei halb aufgeklappter Seitenwand; sowie

Fig. 5    die Anordnung aus Fig. 4, von der Rückseite des Anhängers her gesehen;

Fig. 6    ein Hydraulikschaltplan der Anordnung nach Fig. 1 bis Fig. 5.

In der Zeichnung dargestellt ist ein Anhänger 1 für ein Kraftfahrzeug, nach Art eines Wohnwagens oder einer transportablen Verkaufsbude.

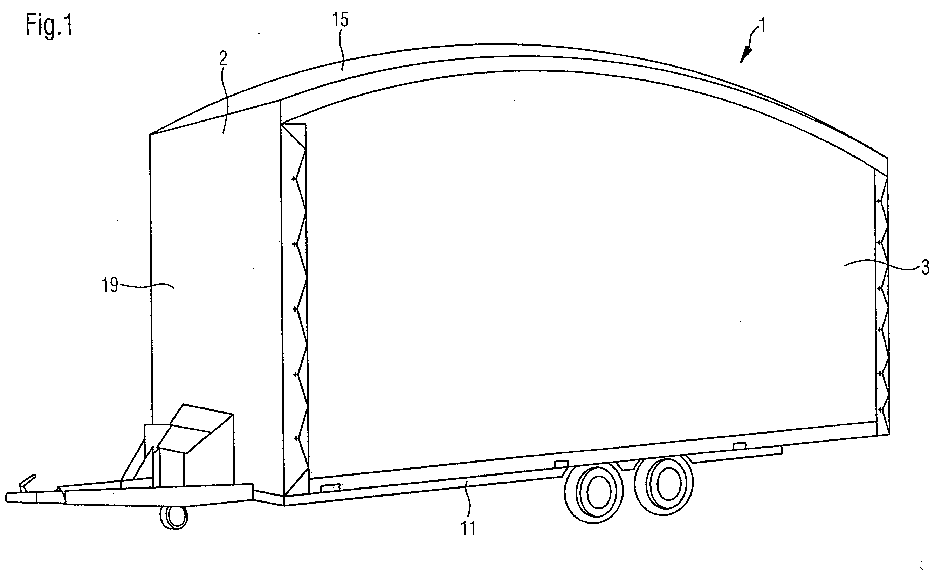

Man erkennt in Fig. 1, dass ein etwa kastenförmiger Aufbau 2 des Anhängers 1 über eine ungeteilte Seitenwand 3 verfügt; die gegenüber liegende Seitenwand 4 könnte spiegelbildlich ausgebildet sein, was jedoch nicht zwingend ist.

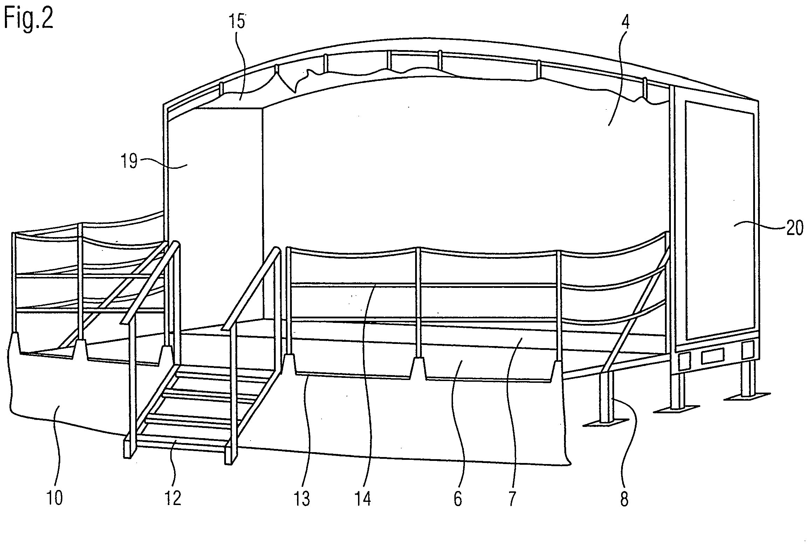

Fig. 2 zeigt, dass jedenfalls die Seitenwand 3 - vorzugsweise auch die gegenüber liegenden Seitenwand 4 - um ihre untere Kante 5 herabklappbar ist bis in eine etwa horizontale Position. Dann dient sie als Bühne 6 und liegt vorzugsweise in einer Flucht mit dem Innenboden 7 des Anhängers 1. Die herabgeklappte Bühne 6 kann durch Füße 8 abgestützt sein. Entlang ihrer dem Publikum zgewandten Vorderkante 9 verdeckt eine Schürze 10 das Chassis 11 sowie den sonstigen Unterbau des Anhängers 1. Eine Treppe 12 kann eingehängt werden und erlaubt das Betreten der Bühne 6. Der übrige Bühnenumfang 13 kann durch ein anbaubares Geländer 14 schützend umgeben sein.

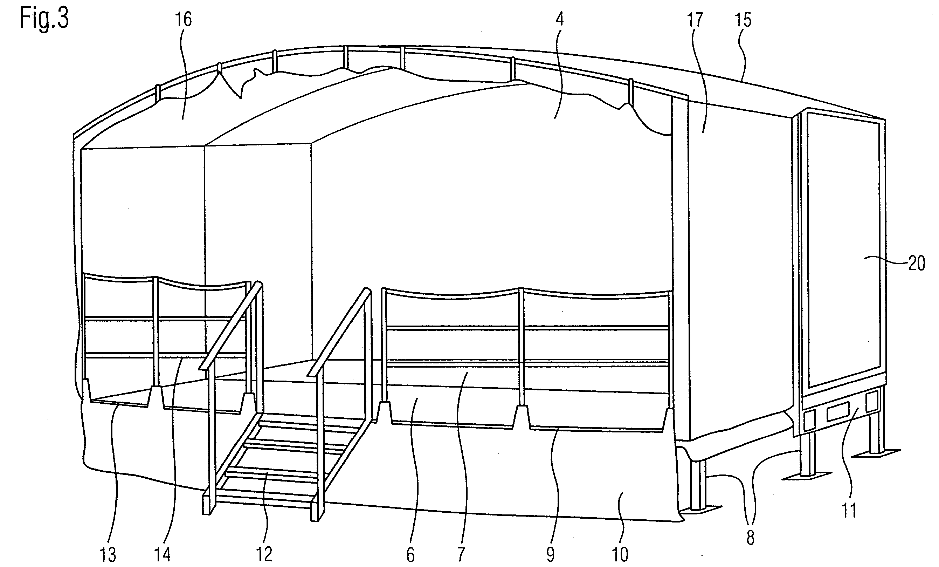

Gemäß Fig. 3 lässt sich im Anschluss daran unter dem Dach 15 des Anhängers 1 ein Zeltdach 16 herausziehen, welches die Bühne 6 komplett verdeckt. Das herausziehbare Zeltdach 16 kann auch herabhängende Seitenwände 17 aufweisen.

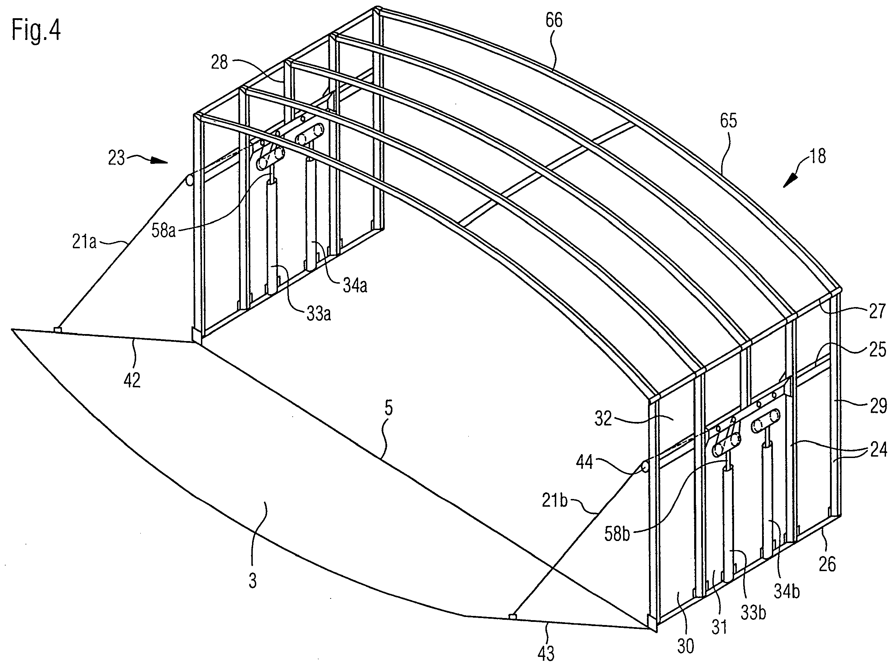

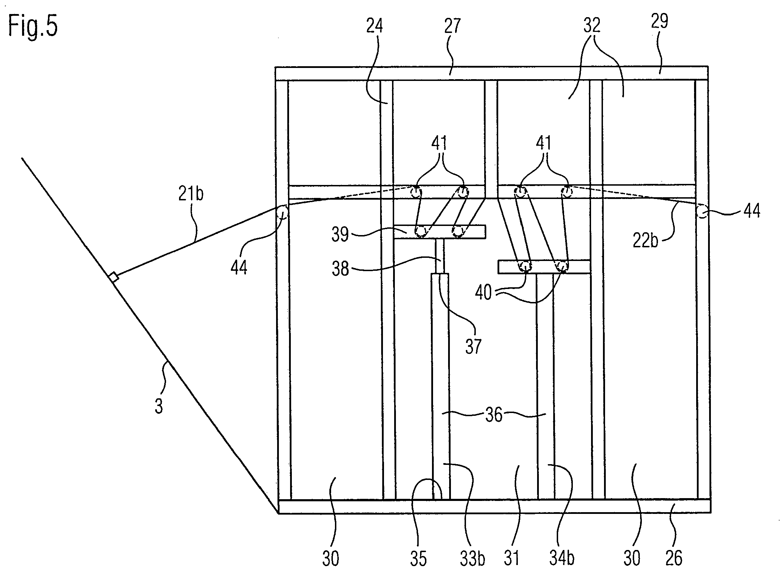

In Fig. 4 ist das tragende Gerüst 18 des Anhängers 1 aus Fig. 1 im Bereich von dessen in Fahrtrichtung gesehenen vorderer und rückwärtiger Seite 19, 20 sowie im Bereich des davon abgestützten Daches 15 zu sehen, samt der mittels von Seilzügen 21, 22 etwa halb herabgelassenen Seitenwand 3. Die Anordnung und Wirkungsweise dieser Seilzug-Mechanik 23 ist in Fig. 5 veranschaulicht, welche eine Ansicht auf die Fig. 4 von der in Fahrtrichtung des Anhängers 1 gesehen rückwärtigen Seite 20 desselben her enthält.

Man erkennt dabei, dass eben diese Rückwand 20 des Anhängers 1 als tragendes Gerüst 18 mehrere vertikale Pfosten 24 aufweist, welche einen horizontalen Balken 25 im oberen Bereich der Rückwand 20 stützen. Die verschiedenen Pfosten 24 bilden zusammen mit einem unteren Horizontalbalken 26 auf Höhe des Innenbodens 7 des Anhängers 1, eben dem soeben beschriebenen mittleren Horizontalbalken 25 sowie einem oberen Horizontalbalken 27 im Bereich des Daches 15 eine Art in sich steifen, rückwärtigen Fachwerkrahmen 28. Bevorzugt sind die verschiedenen Pfosten 24 und Balken 25, 26, 27 an den Berührungs- oder Kreuzungspunkten untereinander verschweißt. Wie man Fig. 4 entnehmen kann, ist im Bereich der Vorderseite 19 ein ebensolcher Fachwerkrahmen 29 vorgesehen.

Jeder solche Fachwerkrahmen 28, 29 weist im unteren Bereich, also zwischen dem unteren und dem mittleren Horizontalbalken 25, 26, drei Gefache 30, 31 auf, im oberen Bereich, also zwischen dem mittleren und dem oberen Horizontalbalken 25, 27, dagegen vier Gefache 32.

Diese vier oberen Gefache 32 sind alle vier etwa gleich groß und weisen jeweils eine etwa quadratische lichte Öffnung auf.

Die Breite eines oberen Gefachs 32 entspricht also etwa einem Viertel der Breite des Anhängers 1.

Der Abstand zwischen dem oberen und dem mittleren Horizontalbalken 25, 27 entspricht ebenfalls etwa einem Viertel der Breite des Anhängers 1.

Da die gesamte Rückseite 20 des Anhängers 1 ebenfalls etwa quadratisch ist, teilt der mittlere Horizontalbalken 25 die Rückseite etwa im Verhältnis 1 : 3 in einen oberen und einen unteren Bereich. Dies heisst, dass der untere Bereich etwa drei mal so hoch ist wie der obere Bereich.

Auch der untere Bereich könnte in vier Gefache unterteilt sein, entsprechend dem oberen Bereich; im dargestellten Ausführungsbeispiel fehlt allerdings der mittlere Pfosten, so dass ein mittleres Gefach 31 entsteht, welches etwa die doppelte Breite eines oberen Gefachs 32 aufweist sowie etwa die dreifache Höhe eines solchen, oberen Gefachs 32. Die beiden äußeren Gefache 30 sind dagegen jeweils nur etwa halb so breit wie das mittlere Gefach 31, aber vorzugsweise genau so hoch.

Innerhalb des unteren, mittleren Gefaches 31 sind 33, im dargestellten Beispiel nebeneinander zwei vertikal ausgerichtete Hydraulikzylinder 34 zu finden, sowohl im Bereich der Vorderwand 19 als auch im Bereich der Rückwand 20. Es gibt demnach bei dieser Ausführungsform also insgesamt vier Hydraulikzylinder 34.

Bevorzugt ist jeder Hydraulikzylinder 34 doppelt wirkend ausgebildet, kann also hydraulisch sowohl aktiv angehoben als auch aktiv abgesenkt werden.

Die unteren Enden 35 des jeweiligen Zylindergehäuses 36 sind am Bodentragwerk bzw. Wagenchassis 11 des Anhängers 1 befestigt, besipielsweise angeschraubt oder angeschweißt.

Die innerhalb des jeweiligen Zylindergehäuses 36 in vertikaler Richtung gleitenden Hydraulikkolben weisen an ihren nach oben ragenden Enden 37 der Kolbenstangen 38 jeweils einen Anschluss auf. Daran ist je ein horizontaler, Balken 39 befestigt, vorzugsweise angeschraubt oder angeschweißt, und also zusammen mit dem Kolben des betreffenden Hydraulikzylinders 33, 34 höhenverstellbar. Bevorzugt entspricht die Länge eines solchen Horizontalbalkens 39 höchstens der Breite eines der vier oberen Gefache 32 bzw. höchstens der halben Breite des mittleren, unteren Gefachs 31. Der jeweilige Horizontalbalken 39 ist jeweils symmetrisch zu der Längsachse des betreffenden Hydraulikzylinders 33, 34. Damit ist der betreffende Horizontalbalken 39 durch Betätigung des zugeordneten Hydraulikzylinders 33, 34 höhenverstellbar.

An einem höhenverstellbaren Horizontalbalken 39 befinden sich jeweils zwei oder mehrere Umlenkrollen 40, welche um eine in Fahrtrichtung weisende Achse drehbeweglich an dem höhenverstellbaren Horizontalbalken 39 gelagert sind. Alle diese Umlenkrollen 40 sind symmetrisch zueinander, bezüglich der Längsachse des betreffenden Hydraulikzylinders 33, 34. Bei zwei Umlenkrollen 40 haben diese gleich Abstände zu dieser Längsachse. Geradzahlige Rollen 40 sind paarweise einander zugeordnet hinsichtlich ihrer Abstände; bei ungeradzahligen Rollen 40 ist eine davon genau auf der Längsachse des betreffenden Hydraulikzylinders 33, 34 angeordnet, die restlichen sind einander paarweise zugeordnet bezüglich ihrer Abstände zu eben dieser Längsachse.

Oberhalb jeder drehbar gelagerten Rolle 40 des höhenverstellbaren Horizontalbalkens 39 gibt es je eine weitere Umlenkrolle 41, welche an dem mittleren Horizontalbalken 25 des betreffenden Fachwerkrahmens 28, 29 gelagert ist, ebenfalls um eine in Fahrtrichtung des Anhängers 1 weisende Achse drehbeweglich, jedoch in ihre Höhe unveränderlich.

Wie man sieht, ist im Bereich der vorderen und hinteren Kante 42, 43 der Seitenwand 3 des Anhängers 1 je ein Seilzug 21, 22 befestigt, der ggf. über eine erste Umlenkrolle 44 an der Seite des Fachwerkrahmens 28, 29 geführt sein kann, dann um eine obere, ortsfest gelagerte Umlenkrolle 41 geschlungen ist, von dort sodann nach unten zu der ersten Umlenkrolle 40 des höhenverstellbaren Horizontalbalkens 39, dann wieder nach oben zu der nächsten ortsfest gelagerten Umlenkrolle 41, wieder nach unten zu der nächsten Umlenkrolle 40 des höhenverstellbaren Horizontalbalkens, ggf. noch mehrmals hin und her, um schließlich an einem Balken 25, 39 ortsfest fixiert zu sein, beispielsweise an dem mittleren Horizontalbalken 25 des Fachwerkrahmens 28, 29.

Wird nun der Hydraulikzylinder 33, 34 in seiner Höhe verstellt, so wirkt die mehrmalige Umlenkung des Seilzugs 21, 22 als Flaschenzug, und durch eine vergleichsweise geringfügige Verstellung des Hydraulikzylinders 33, 34 wird eine mehrfache Verstellung des Seilzugs 21, 22 erreicht, womit dann die Seitenwand 3 herabgeklappt wird, nachdem Verriegelungen an dieser gelöst wurden.

Da die Rollen 40 an dem höhenverstellbaren Horzontalbalken 39 spiegelbildlich zueinander angeordnet und von einem einzigen Seilzug 21, 22 umschlungen sind, befindet sich dieser stets in einem Gleichgewicht nach Art einer Waage, bleibt also horizontal ausgerichtet.

Man kann also eine Seitenwand 3 herablassen oder hochziehen, ohne dass währenddem auch die andere Seitenwand 4 bewegt würde. Diese kann entweder genauso, aber unabhängig von der ersten Seitenwand 3 herab- und wieder hochklappbar sein, also - wie in den Fig. 4 und 5 angedeutet - durch weitere Seilzugmechaniken 23 im Bereich der Vorder- und Rückwand 19, 20, welche vorzugsweise spiegelbildlich zu den ersten Seilzugmechaniken 23 für die erste Seitenwand 3 angeordnet sind, bezogen auf eine vertikale Längsmittelebene als Symmetrieebene, oder die Seitenwand 4 ist gar nicht oder auf eine andere Art zu öffnen.

Sofern die Seitenwand 4 gleichermaßen zu öffnen ist, werden zwar bei der dargestellten Ausführungsform dafür weitere Hydraulikzylinder 33, 34 benötigt; alle Hydraulikzylinder 34 können jedoch von nur einer einzigen Hydraulikpumpe 45 angetrieben werden, eventuell mit einer gegenseitigen Verriegelung, so dass stets nur maximal zwei Hydraulikzylinder 33, 34 aktiv sein können und demnach eine Überlastung der Hydraulikpumpe 45 vermieden wird.

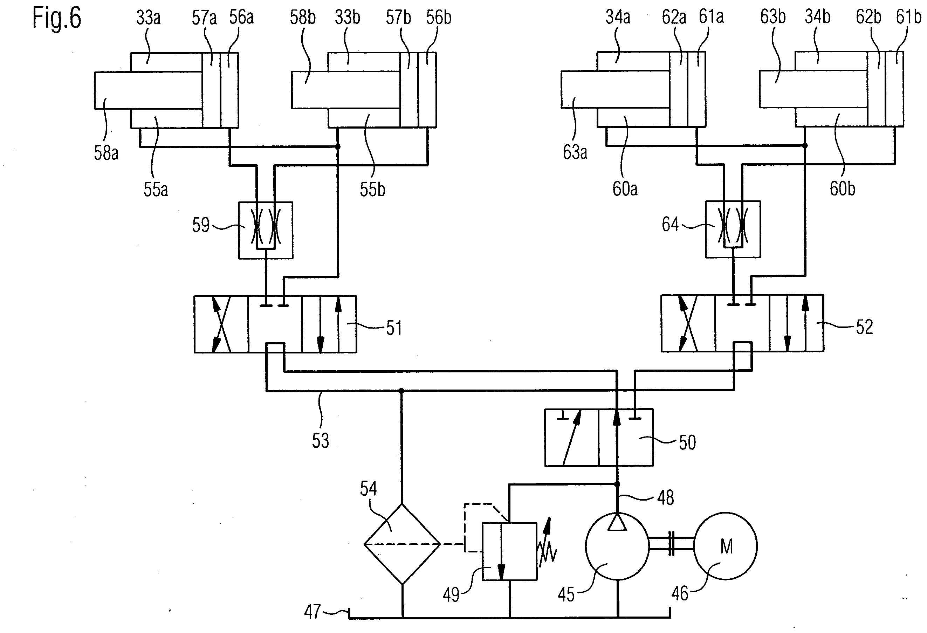

Als weitere Besonderheit sei auf die Steuerung der Hydraulikzylinder 33, 34 eingegangen, welche beispielhaft in Fig. 6 dargestellt ist.

Man erkennt, dass es gemäß Fig. 6 insgesamt vier Hydraulikzylinder 33a, 33b, 34a, 34b gibt; davon sind zwei Hydraulikzylinder 33a, 33b den Seilzügen 21a, 21b einer herabklappbaren Seitenwand 3 zugeordnet, die beiden übrigen Hydraulikzylinder 34a, 334b den Seilzügen 22a, 22b der anderen herabklappbaren Seitenwand 4. Demzufolge müssen jeweils zwei Hydraulikzylinder 33a, 33b oder 34a, 34b synchron betrieben werden, damit die jeweilige Seitenwand 3 oder 4 gleichmäßig bewegt wird, ohne sich zu verwinden.

Dies leistet beispielsweise die in Fig. 6 wiedergegebene Hydraulikschaltung:
Die Hydraulikpumpe 45 wird von einem Motor 46 angetrieben und saugt dabei Öl aus einem Tank 47 in eine Druckleitung 48. Ein an letztere angesschlossenes Überdruckventil 49 begrenzt den Druck in der Druckleitung 48 auf Werte unterhalb einer einstellbaren Grenze; bei höheren Drucken öffnet das Überdruckventil 49 und lässt das Öl in den Tank 47 zurückströmen.

An der Druckleitung 48 ist ferner beispielsweise ein 3/2-Wegeventil 50 angeschlossen. Dieses leitet in dem dargestellten Schaltzustand das Hydrauliköl von der Druckleitung 48 zu einem ersten Ventil, vorzugsweise einem 4/3-Wegeventil 51, in dem anderen Schaltzustand dagegen von der Druckleitung 48 zu einem zweiten Ventil, vorzugsweise zu einem zweiten 4/3-Wegeventil 52.

In dem dargestellten Schaltzustand strömt das Öl also in dem 4/3-Wegeventil 51 zu einer Sammelleitung 53 und von dieser über einen Filter 54 zurück in den Tank 47. In diesem Zustand wird kein Hydraulikventil 33a, 33b, 34a, 34b bewegt.

Wird nun von diesem Zustand ausgehend das erste, links dargestellte 4/3-Wegeventil 51 in dessen rechts wiedergegebenen Schaltzustand bewegt, strömt das Hydrauliköl demnach gerade durch das Ventil 51 und gelangt unmittelbar zu den kolbenstangenseitigen Kammern 55a, 55b der beiden Hydraulikventile 33a, 33b. Da gleichzeitig aus den kolbenseitigen Kammern 56a, 56b Öl austreten kann, wirkt auf die Kolben 57a, 57b eine eine Kraft in Richtung der freien Kolbenseite, und die Kolbenstangen 58a, 58b werden eingefahren.

Dabei werden gemäß Fig. 4 die beiden Horizontalbalken 39a, 39b abgesenkt und demnach die aus den Umlenkrollen 40a, 41a und die jeweiligen Seilzüge 21a, 21b gebildeten Flaschenzüge in die Länge gezogen - die freien Enden der Seile 21a, 21b werden dadurch eingezogen und die betreffende Seitenwand 3 hochgeklappt.

Den dazu erforderlichen Synchronlauf der beiden Hydraulikzylinder 33a, 33b erzielt man beispielsweise dadurch, dass in die Zu- oder Rückleitung zu zwei einander entsprechenden Zylinderkammern 55a und 55b oder 56a und 56b ein Stromteiler 59 eingesetzt ist, welcher dafür sorgt, dass sich der Ölstrom aus der Druckleitung 48 gleichmäßig auf die beiden Hydraulikzylinder 33a, 33b aufteilt. Bei dem zuletzt erläuterten Schaltzustand wird unter Umkehrung der Strömungsrichtung in dem Stromteiler 59 der Ölstrom von den beiden Hydraulikzylindern 33a, 33b wieder vereinigt und sodann über die Sammelleitung 53 und den Filter 54 zu dem Tank 47 zurückgeleitet.

Wird stattdessen das Ventil 51 in den links dargestellten Zustand gesteuert, so kreuzen sich die Ölpfade innerhalb des Ventils 51 und das Hydrauliköl von der Druckleitung 48 gelangt zunächst zu dem Stromteiler 54, wo sich dieser Stromfluss gleichmäßig in zwei Hälften aufspaltet, die jeweils einer kolbenseitigen Kammer 56a, 56b der beiden Hydraulikzylinder 33a, 33b zugeleitet werden. Die Kolbenstangen 58a, 58b werden dabei herausgeschoben, weil gleichzeitig auch das Öl von den kolbenstangenseitigen Kammern 55a, 55b über das Ventil 51 zu der Sammelleitung 53 und von dort schließlich über den Filter 54 in den Tank 47 zurückfließen kann.

Durch das Herausschieben der Kolbenstangen 58a, 58b werden die jeweils zugeordneten Horizontalbalken 39a, 39b angehoben und die Flaschenzüge verkürzt - das jeweils freie Trum der Seilzüge 21a, 21b verlängert sich und die Seitenwand 3 kann herabklappen.

Entsprechend erfolgt das Heben oder Senken der anderen Seitenwand 4. Dazu wird zunächst das Ventil 50 in den in Fig. 6 links dargestellten Zustand umgesteuert und dadurch der Ölstrom von der Druckleitung 48 zu dem zweiten 4/3-Wegeventil 52 gelenkt.

Die drei Schaltzustände der beiden 4/3-Wegeventile 51, 52 entsprechen sich:
In der dargestellten Mittelposition fließt das Hydrauliköl unmittelbar zurück zu der Sammelleitung 53 und von dort über den Filter 54 zurück in den Tank 47.

Zum Hochklappen der Seitenwand 4 werden durch Steuern des Ventils 52 in dessen in Fig. 6 wiedergegebenen Zustand die beiden kolbenstangenseitigen Kammern 60a, 60b gefüllt. Gleichzeitig werden die beiden kolbenseitigen Kammern 61a, 61b entleert, und die Kolben 62a, 62b erfahren jeweils eine Kraft, welche die Kolbenstangen 63a, 63b in den Hydraulikzylinder 34a, 34b hineinzieht. Die dabei erforderliche Synchronität liefert wiederum ein Stromteiler 64 an dem Zusammenfluss der beiden Zylinder-Teilströme. Schließlich gelangt das Öl von den kolbenseitigen Kammern 61a, 61b über die Sammelleitung 53 und den Filter 54, welcher optional ist, zurück in den Tank 47.

Zum Hochklappen der Seitenwand 4 wird das zugeordnete 4/3-Wege-Ventil 52 in den links dargestellten Zustand umgesteuert, wobei sich die Strömungpfade innerhalb der beiden Hydraulikzylinder 34a, 34b gegenüber dem zuletzt beschreibenden Fall umkehren. Nun strömt das Öl von der Druckleitung 48 zunächst zu dem Stromteiler 64 und teilt sich dort etwa gleichmäßig auf die kolbenseitigen Kammern 61a, 61b der beiden Hydraulikzylinder 34a, 34b auf.

Wie man sieht, können mit dieser Schaltung beide Seitenwände 3, 4 in jeden Zustand gebracht werden. Allerdings geschieht dies nicht simultan, sondern es wird jeweils nur eine Seitenwand 3, 4 bewegt, erst danach ggf. die andere. Dies hat den Vorteil, dass die Hydraulikpumpe 45 und damit auch deren Antriebsmotor 46 nur auf etwa die halbe Leistung ausgelegt werden muss, verglichen mit dem Fall, dass beide Wände 3, 4 gleichzeitig bewegt würden. Dies lässt jedoch das Umschaltventil 50 nicht zu.

Bei einer noch anderen Ausführungsform der Erfindung werden die beiden Seilzüge 21a, 21b nicht symmetrich zueinander geführt zu je einem Flaschenzug an der Vorder- und Rückseite 19, 20 des Anhängers 1.

Vielmehr wird ein Seilzug 21a von der Seitenwand 3 nicht zu der Flaschenzug-Mechanik des nächstgelegenen Hydraulikzylinders 33a geführt, sondern beispielsweise über die Dachkonstruktion 65 des Gerüsts 18 in Längsrichtung des Anhängers 1 zu dessen jeweils anderen Vorder- oder Rückseite 19, 20 geführt und sodann zusammen mit dem dortigen Seilzug 21b gemeinsam verstellt. In diesem Fall werden also nicht die Hydraulikzylinder 33a und 33b oder 34a und 34b gemeinsam verstellt, sondern entweder die Hydraulikzylinder 33a und 34a an der Vorderseite 19 gemeinsam oder die Hydraulikzylinder 33b und 34b an der Rückseite 20 des Anhängers 1 gemeinsam. Da somit die betreffenden Balken 39 synchron bewegt werden, kann jeweils ein Hydraulikzylinder eingespart und nur ein einziger Hydraulikzylinder pro Vorder- oder Rückwand 19, 20 verwendet werden, an welchem jeweils ein einziger, doppelt so langer Horizontalbalken 39 befestigt ist.

Der dazu jeweils über die Dachkonstruktion 65 laufende Seilzug 21a, 22b kann beispielsweise innerhalb von hohlen oder querschnittlich U-förmigen, längs verlaufenden Dachsparren 66 geführt sein, vorzugsweise jeweils in einem Dachsparren 66, der mit einem der betreffenden Seitenwand 3, 4 benachbarten oder nahegelegenen Pfosten 24 in einer gemeinsamen, vertikalen Ebene liegt. Solchenfalls ist dieer Seilzug 21a, 22b weder von außen noch von innen sichtbar, sondern wird von dem Gerüst selbst 18 und von dessen Bespannung verdeckt.

Bezugszeichenliste

| | | | |
|---|---|---|---|
| 1 | Anhänger | 26 | unterer Horizontalbalken |
| 2 | Aufbau | 27 | oberer Horizontalbalken |
| 3 | Seitenwand | 28 | Fachwerkrahmen |
| 4 | Seitenwand | 29 | Fachwerkrahmen |
| 5 | untere Kante | 30 | unteres äußeres Gefach |
| 6 | Bühne | 31 | unteres mittleres Gefach |
| 7 | Innenboden | 32 | oberes Gefach |
| 8 | Füße | 33 | Hydraulikzylinder |
| 9 | Vorderkante | 34 | Hydraulikzylinder |
| 10 | Schürze | 35 | unteres Ende |
| 11 | Chassis | 36 | Zylindergehäuse |
| 12 | Treppe | 37 | Ende |
| 13 | Bühnenumfang | 38 | Kolbenstange |
| 14 | Geländer | 39 | Horizontalbalken |
| 15 | Dach | 40 | Umlenkrolle |
| 16 | Zeltdach | 41 | Umlenkrolle |
| 17 | Zelt-Seitenwand | 42 | vordere Kante |
| 18 | Gerüst | 43 | hintere Kante |
| 19 | Vorderseite | 44 | Umlenkrolle |

(fortgesetzt)

| | | | |
|---|---|---|---|
| 20 | Rückseite | 45 | Hydraulikpumpe |
| 21 | Seilzug | 46 | Motor |
| 22 | Seilzug | 47 | Tank |
| 23 | Seilzug-Mechanik | 48 | Druckleitung |
| 24 | Pfosten | 49 | Überdruckventil |
| 25 | horizontaler Balken | 50 | 3/2-Wegeventil |
| 51 | erstes 4/3-Wegeventil | | |
| 52 | zweites 4/3-Wegeventil | | |
| 53 | Sammelleitung | | |
| 54 | Filter | | |
| 55 | kolbenstangenseitige Kammer | | |
| 56 | kolbenseitige Kammer | | |
| 57 | Kolben | | |
| 58 | Kolbenstange | | |
| 59 | Stromteiler | | |
| 60 | kolbenstangenseitige Kammer | | |
| 61 | kolbenseitige Kammer | | |
| 62 | Kolben | | |
| 63 | Kolbenstange | | |
| 64 | Stromteiler | | |
| 65 | Dachkonstruktion | | |
| 66 | Dachsparren | | |

**Patentansprüche**

1. Mobile Showbühne, mit wenigstens einer von der Ladefläche eines Fahrzeugs, insbesondere eines Anhängers (1), seitlich als Bühne (6) mittels Seilzügen (21,22) herabklappbaren Wand (3,4), mit folgenden Merkmalen:

   a) vor und/oder hinter der Ladefläche (7), insbesondere im Bereich einer Vorder- und/oder Rückwand (19,20) des betreffenden Fahrzeugs oder Anhängers (1), ist wenigstens je eine Vertikalverstelleinrichtung vorgesehen, die einerseits direkt oder indirekt am Chassis (11) des Fahrzeugs oder Anhängers (1) abgestützt ist und andererseits mit einem etwa horizontal verlaufenden Balken (39) etwa in dessen horizontaler Mitte zu dessen Vertikalverstellung gekoppelt ist;
   b) an jedem vertikal verstellbaren Horizontalbalken (39) ist jeweils wenigstens eine Flaschenzug-Umlenkrolle (40) vorgesehen;
   c) um an einem vertikal verstellbaren Horizontalbalken (39) angelenkte Flaschenzug-Umlenkrollen (40) sind ausschließlich Trume eines oder mehrerer solcher Seilzüge (21,22) geschlungen, dessen freies Ende oder deren freie Enden an einer einzigen, herabklappbaren Wand (3;4) angeschlossen ist oder sind.

2. Mobile Showbühne nach Anspruch 1, **dadurch gekennzeichnet, dass** eine, mehrere und/oder alle Vertikalverstelleinrichtungen jeweils einen Hydraulikzylinder (33,34) umfassen, wobei vorzugsweise die Kolbenstangen (38,58) eines, mehrerer und/oder aller Hydraulikzylinder (33,34) jeweils vertikal verlaufen.

3. Mobile Showbühne nach Anspruch 2, **dadurch gekennzeichnet, dass** für einen, mehrere und/oder alle Hydraulikzylinder (33,34) nur eine einzige Hydraulikpumpe (45) vorgesehen ist.

4. Mobile Showbühne nach einem der vorhergehenden Ansprüche, **dadurch gekennzeichnet, dass** sich im Bereich der Vorder- und/oder Rückseite (19,20) in der Nähe einer oder vorzugsweise jeder Seitenwand (3,4) am Chassis (11) des Fahrzeugs oder Anhängers (1) je eine Umlenkrolle (44) für den betreffenden Seilzug (21,22) befindet.

5. Mobile Showbühne nach einem der vorhergehenden Ansprüche, **dadurch gekennzeichnet, dass** für jeden Seilzug (21,22) je ein Flaschenzug vorgesehen ist, umfassend einen oder mehrere am Chassis (11) des Fahrzeugs oder Anhängers (1) fest verankerte Umlenkrollen (41) sowie mehrere, an einem vertikal verstellbaren Horizontalbalken (39) demgegenüber beweglich gelagerte Umlenkrollen (40).

6. Mobile Showbühne nach einem der vorhergehenden Ansprüche, **dadurch gekennzeichnet, dass** ein, mehrere oder alle Trume eines Seilzugs (21,22) im Bereich eines Flaschenzugs parallel zueinander verlaufen, insbesondere in vertikaler Richtung, und/oder dass sich die Richtung eines oder mehrerer oder aller Trume eines Seilzugs (21,22) im Bereich eines Flaschenzugs bei einer Hub- oder Senkbewegung verändert.

7. Mobile Showbühne nach einem der vorhergehenden Ansprüche, **dadurch gekennzeichnet, dass** an einem etwa horizontal verlaufenden, vertikal verstellbaren Balken (39) mehrere bewegliche Umlenkrollen (40) desselben Seilzugs (21;22) nebeneinander angeordnet oder gelagert sind, vorzugsweise zu beiden Seiten eines an dem horizontal verlaufenden, vertikal verstellbaren Balken (39) befestigten Anschlusses der Vertikalverstelleinrichtung oder des betreffenden Hydraulikzylinders (33,44).

8. Mobile Showbühne nach einem der vorhergehenden Ansprüche, **dadurch gekennzeichnet, dass** pro Vorder- oder Rückwand (19,20) jeweils zwei etwa horizontal verlaufende, vertikal verstellbare, vorzugsweise gleich lange Balken (39) angeordnet sind mit jeweils zwei oder mehr Umlenkrollen (40) für einen Seilzug (21;22) für je eine seitlich herabklappbare Wand (3;4).

9. Mobile Showbühne nach einem der vorhergehenden Ansprüche, **dadurch gekennzeichnet, dass** zwei Hydraulikzylinder (33,34) innerhalb einer vertikalen Ebene quer zur Fahrtrichtung des betreffenden Fahrzeugs oder Anhängers (1) nebeneinander angeordnet und/oder parallel zueinander ausgerichtet sind, vorzugsweise pro Vorder- oder Rückwand (19,20) jeweils zwei Hydraulikzylinder (33,34).

10. Mobile Showbühne nach einem der vorhergehenden Ansprüche, **dadurch gekennzeichnet, dass** der seitliche Abstand zwischen den Verankerungspunkten zweier in einer vertikalen Ebene quer zur Fahrtrichtung des betreffenden Fahrzeugs oder Anhängers (1) nebeneinander angeordneter Hydraulikzylinder (33,34) am Chassis (11) des Fahrzeugs oder Anhängers (1) gleich oder größer ist als die halbe Länge eines horizontal verlaufenden, vertikal verstellbaren Balkens (39), beispielsweise gleich oder größer als zwei Drittel der Länge eines horizontal verlaufenden, vertikal verstellbaren Balkens (39), vorzugsweise gleich oder größer als drei Viertel der Länge eines horizontal verlaufenden, vertikal verstellbaren Balkens (39), insbesondere gleich oder größer als die Länge eines horizontal verlaufenden, vertikal verstellbaren Balkens (39) abzüglich des Außendurchmessers eines Hydraulikzylinders (33,34).

11. Mobile Showbühne nach einem der vorhergehenden Ansprüche, **dadurch gekennzeichnet, dass** der seitliche Abstand zwischen den Verankerungspunkten zweier in einer vertikalen Ebene quer zur Fahrtrichtung des betreffenden Fahrzeugs oder Anhängers (1) nebeneinander angeordneter Hydraulikzylinder (33,34) am Chassis (11) des Fahrzeugs oder Anhängers (1) gleich oder kleiner ist als das Anderthalbfache der Länge eines horizontal verlaufenden, vertikal verstellbaren Balkens (39), beispielsweise gleich oder kleiner als vier Drittel der Länge eines horizontal verlaufenden, vertikal verstellbaren Balkens (39), vorzugsweise gleich oder kleiner als fünf Viertel der Länge eines horizontal verlaufenden, vertikal verstellbaren Balkens (39), insbesondere gleich oder kleiner als die Länge eines horizontal verlaufenden, vertikal verstellbaren Balkens (39).

12. Mobile Showbühne nach einem der vorhergehenden Ansprüche, **dadurch gekennzeichnet, dass** in den Hyraulikkreislauf zweier innerhalb einer vertikalen Ebene quer zur Fahrtrichtung des Fahrzeugs oder Anhängers (1) nebeneinander angeordneter Hydraulikzylinder (33,34) wenigstens je ein unabhängig steuerbares Ventil (51,52) eingeschaltet ist.

13. Mobile Showbühne nach einem der vorhergehenden Ansprüche, **dadurch gekennzeichnet, dass** sich zwischen zwei innerhalb einer vertikalen Ebene quer zur Fahrtrichtung des Fahrzeugs oder Anhängers (1) nebeneinander angeordneten Hydraulikzylindern (33,34) keine Strebe des Fahrzeugchassis (11) befindet.

14. Mobile Showbühne nach einem der vorhergehenden Ansprüche, **dadurch gekennzeichnet, dass** wenigstens ein Seilzug (21,22) im Bereich des Dachs (15) in oder entgegen der Fahrtrichtung des Fahrzeugs oder Anhängers (1) von der Vorder- zur Rückwand (19,20) des betreffenden Fahrzeugs oder Anhängers (1) geführt ist, insbesondere entlang von Dachsparren (66) des tragenden Gerüsts (18) des Aufbaus (2).

15. Mobile Showbühne nach einem der vorhergehenden Ansprüche, **dadurch gekennzeichnet, dass** von zwei Seilzügen (21;22) einer herabklappbaren Wand (3;4) einer in oder entgegen der Fahrtrichtung des Fahrzeugs oder Anhängers (1) von der Vorder- zur Rückwand (19,20) des betreffenden Fahrzeugs oder Anhängers (1) geführt ist, der andere dagegen nicht, und dass beide um Flaschenzug-Umlenkrollen (40,41) eines gemeinsamen, horizontal verlaufenden, vertikal verstellbaren Balkens (39) geschlungen sind.

**Claims**

1. Mobile show stage, with at least one wall (3,4) laterally unfoldable from a load platform of a vehicle or of a trailer (1) by means of cable haulage (21,22) to form a stage, comprising the following features:

   a) in front and/or behind the load platform (7), especially in the area of a front and/or rear wall (19,20) of the regarding vehicle or trailer (1), at least one vertical adjusting equipment is provided each, which on the one hand is directly or indirectly supported by the chassis (11) of the vehicle or trailer, and on the other hand is coupled for a vertical adjustment to an approximately horizontally extending beam (39) approximately in the horizontal center thereof;
   b) at each vertically adjustable horizontal beam (39), there is provided at least one guide pulley (40) of a pulley block;
   c) around guide pulleys (40) of a pulley block mounted to a vertically adjustable horizontal beam (39), only strands of one or several such cable haulages are looped, the free end or ends of which is or are connected to a single, unfoldable wall (3;4).

2. Mobile show stage according to claim 1, **characterized in that** one, several or all vertical adjusting equipment sets each comprise a hydraulic cylinder (33,34), wherein preferably the piston rods (38,58) of one, several or all hydraulic cylinders (33,34) extend vertically.

3. Mobile show stage according to claim 2, **characterized in that** only a single hydraulic pump (45) is provided for one, several and/or all hydraulic cylinders (33,34).

4. Mobile show stage according to one of the preceding claims, **characterized in that** a guide pulley (40) for a regarding cable haulage (21,22) is located at the chassis (11) of the vehicle or trailer (1) in the area of the front and/or rear face (19,20) near one or preferably each lateral wall (3,4).

5. Mobile show stage according to one of the preceding claims, **characterized in that** for each cable haulage (21,22), a pulley block is provided, comprising one or several guide pulleys (41) fixedly secured to the chassis (11) of the vehicle or trailer (1), as well as several guide pulleys (40) movably mounted to a vertically adjustable horizontal beam (39).

6. Mobile show stage according to one of the preceding claims, **characterized in that** one, several or all strands of a cable haulage (21,22) extend parallel to each other in the area of a pulley block, especially in a vertical direction, and/or that the direction of one or several or all strands of a cable haulage (21,22) varies in the area of a pulley block during a lifting or lowering movement.

7. Mobile show stage according to one of the preceding claims, **characterized in that** several movable guide pulleys (40) of the same cable haulage (21;22) are arranged or mounted side by side at an approximately horizontally extending, vertically adjustable beam (39), preferably at both sides of a connection comprised by the vertical adjusting equipment or by the regarding hydraulic cylinder (33,44) and secured to the horizontally extending, vertically adjustable beam (39).

8. Mobile show stage according to one of the preceding claims, **characterized in that** per front or rear wall (19,20), there are arranged two approximately horizontally extending, vertically adjustable beams (39), preferably of equal length, each comprising two or several guide pulleys (40), each for a cable haulage (32;22) of a laterally unfoldable wall (3;4).

9. Mobile show stage according to one of the preceding claims, **characterized in that** two hydraulic cylinders (33,34) are arranged side by side and/or aligned in parallel to each other within a vertical plane across the direction of travel of the regarding vehicle or trailer (1), preferably two hydraulic cylinders (33,34) per front or rear wall (19,20).

10. Mobile show stage according to one of the preceding claims, **characterized in that** the lateral distance between the anchoring points of two hydraulic cylinders (33,34) arranged side by side at the chassis (11) of the vehicle or trailer (1) within a vertical plane across the direction of travel is equal to or greater than half the length of a horizontally extending, vertically adjustable beam (39), for example equal to or greater than two thirds of the length of a horizontally extending, vertically adjustable beam (39), preferably equal to or greater than three quarters of the length of a horizontally extending, vertically adjustable beam (39), especially equal to or greater than the length of a horizontally extending, vertically adjustable beam (39) minus the outer diameter of a hydraulic cylinder (33,34).

11. Mobile show stage according to one of the preceding claims, **characterized in that** the lateral distance between the anchoring points of two hydraulic cylinders (33,34) arranged side by side at the chassis (11) of the vehicle or trailer (1) within a vertical plane across the direction of travel is equal to or smaller than one and a half times the length of a horizontally extending, vertically adjustable beam (39), for example equal to or smaller than four thirds of the length of a horizontally extending, vertically adjustable beam (39), preferably equal to or smaller than five quarters of the length of a horizontally extending, vertically adjustable beam (39), especially equal to or smaller than the length of a horizontally extending, vertically adjustable beam (39).

12. Mobile show stage according to one of the preceding claims, **characterized in that** at least one independently controllable valve (51,52) is each arranged in-circuit within the hydraulic circuit of two hydraulic cylinders (33,34) arranged side by side within a vertical plane across the direction of travel of the vehicle or trailer (1).

13. Mobile show stage according to one of the preceding claims, **characterized in that** no strut of the vehicle's chassis (11) is arranged between two hydraulic cylinders (33,34) arranged side by side within a vertical plane across the direction of travel of the vehicle or trailer (1).

14. Mobile show stage according to one of the preceding claims, **characterized in that** at least one cable haulage (21,22) is led in the area of the roof (15) from the front to the rear wall (19,20) of the regarding vehicle or trailer (1) along or against the direction of travel of the vehicle or trailer (1), especially along rafters (66) of the supporting framework (18) of the body (2).

15. Mobile show stage according to one of the preceding claims, **characterized in that** one of two cable haulages (21,229 of an unfoldable wall (3,4) is led from the front to the rear wall (19,20) of the regarding vehicle or trailer (1) along or against the direction of travel of the vehicle or trailer (1), while the other is not, and **in that** both are looped around guide pulleys (40,41) of a pulley block of a common, horizontally extending, vertically adjustable beam (39).

**Revendications**

1. Podium mobile avec au moins une paroi (3, 4) rabattable latéralement comme plateforme (6) au moyen de câbles (21, 22) de la plateforme de chargement d'un véhicule ou d'une remorque (1), présentant les caractéristiques suivantes :

   a) devant et/ou derrière la plateforme de chargement (7), en particulier dans la zone d'un panneau avant et/ou panneau arrière (19, 20) du véhicule ou de la remorque en question (1), est prévu au moins chacun un dispositif de réglage vertical qui, d'une part, repose directement ou indirectement sur le châssis (11) du véhicule ou de la remorque (1) et, d'autre part, est accouplé à une poutre (39) s'étendant approximativement horizontalement approximativement dans son centre horizontal par rapport à son réglage vertical ;
   b) sur chaque poutre horizontale (39) réglable verticalement est prévue à chaque fois au moins une poulie de renvoi de palan (40) ;
   c) autour de poulies de renvoi de palan (40) articulées au niveau d'une poutre horizontale (39) réglable verticalement sont enroulés uniquement des brins d'un ou de plusieurs de ces câbles (21, 22) dont son extrémité libre ou leurs extrémités libres est ou sont raccordée(s) à une seule et unique paroi rabattable (3 ; 4).

2. Podium mobile selon la revendication 1, **caractérisé en ce qu'**un, plusieurs et/ou tous les dispositifs de réglage vertical comprennent chacun un vérin hydraulique (33, 34), **en ce que** de préférence les tiges de piston (38, 58) d'un, de plusieurs et/ou de tous les vérins hydrauliques (33, 34) s'étendent chacune verticalement.

3. Podium mobile selon la revendication 2, **caractérisé en ce qu'**une seule et unique pompe hydraulique (45) est prévue pour un, plusieurs et/ou tous les vérins hydraulique (33, 34).

4. Podium mobile selon l'une des revendications précédentes, **caractérisé en ce que** respectivement une poulie de renvoi (44) pour le câble correspondant (21, 22) se trouve dans la zone du panneau avant et/ou du panneau arrière (19, 20) à proximité d'une ou de préférence de chaque paroi latérale (3, 4) sur le châssis (11) du véhicule ou de la remorque (1).

5. Podium mobile selon l'une des revendications précédentes, **caractérisé en ce que** respectivement un palan est prévu pour chaque câble (21, 22), comprenant une ou plusieurs poulies de renvoi (41) ancrées à demeure sur le châssis (11) du véhicule ou de la remorque (1) ainsi que plusieurs poulies de renvoi (40) montées sur une poutre (39) horizontale réglable verticalement de manière mobile par rapport à celle-ci.

6. Podium mobile selon l'une des revendications précédentes, **caractérisé en ce qu'**un, plusieurs ou tous les brins d'un câble (21, 22) sont parallèles les uns par rapport aux autres dans la zone d'un palan, en particulier dans le sens vertical, et/ou **en ce que** le sens d'un ou de plusieurs ou de tous les brins d'un câble (21, 22) change dans la zone d'un palan en cas de mouvement de levage ou de descente.

7. Podium mobile selon l'une des revendications précédentes, **caractérisé en ce que** sur une poutre (39) s'étendant approximativement horizontalement, réglable verticalement, sont disposées ou montées côte à côte plusieurs poulies de renvoi mobiles (40) du même câble (21 ; 22), de préférence des deux côtés d'un raccordement du dispositif de réglage vertical ou du vérin hydraulique correspondant (33, 44) fixé à la poutre (39) s'étendant horizontalement, réglable verticalement.

8. Podium mobile selon l'une des revendications précédentes, **caractérisé en ce que** par panneau avant ou arrière (19, 20) respectivement deux poutres (39) s'étendant approximativement horizontalement, réglables verticalement, de préférence d'égale longueur, sont disposées avec respectivement deux ou plusieurs poulies de renvoi (40) pour un câble (21 ; 22) pour respectivement une paroi rabattable latéralement (3 ; 4).

9. Podium mobile selon l'une des revendications précédentes, **caractérisé en ce que** deux vérins hydrauliques (33, 34) sont disposés côte à côte à l'intérieur d'un plan vertical transversal au sens de marche du véhicule ou de la remorque (1) en question et/ou sont alignés parallèlement l'un par rapport à l'autre, de préférence respectivement deux vérins hydrauliques (33, 34) par panneau avant ou arrière (19, 20).

10. Podium mobile selon l'une des revendications précédentes, **caractérisé en ce que** la distance latérale entre les points d'ancrage de deux vérins hydrauliques (33, 34) disposés côte à côte sur le châssis (11) du véhicule ou de la remorque (1) dans un plan vertical transversal au sens de marche du véhicule ou de la remorque (1) en question est égale ou supérieure à la moitié de la longueur d'une poutre (39) s'étendant horizontalement, réglable verticalement, par exemple égale ou supérieure à deux tiers de la longueur d'une poutre (39) s'étendant horizontalement, réglable verticalement, de préférence égale ou supérieure à trois quarts de la longueur d'une poutre (39) s'étendant horizontalement, réglable verticalement, en particulier égale ou supérieure à la longueur d'une poutre (39) s'étendant horizontalement, réglable verticalement, moins le diamètre extérieur d'un vérin hydraulique (33, 34).

11. Podium mobile selon l'une des revendications précédentes, **caractérisé en ce que** la distance latérale entre les points d'ancrage de deux vérins hydrauliques (33, 34) disposés côte à côte sur le châssis (11) du véhicule ou de la remorque (1) dans un plan vertical transversal au sens de marche du véhicule ou de la remorque (1) en question est égale ou inférieure à une fois et demie de la longueur d'une poutre (39) s'étendant horizontalement, réglable verticalement, par exemple égale ou inférieure à quatre tiers de la longueur d'une poutre (39) s'étendant horizontalement, réglable verticalement, de préférence égale ou inférieure à cinq quarts de la longueur d'une poutre (39) s'étendant horizontalement, réglable verticalement, en particulier égale ou inférieure à la longueur d'une poutre (39) s'étendant horizontalement, réglable verticalement.

12. Podium mobile selon l'une des revendications précédentes, **caractérisé en ce que** dans le circuit hydraulique de deux vérins hydrauliques (33, 34) disposés côte à côte dans un plan vertical transversal au sens de marche du véhicule ou de la remorque (1), au moins chaque fois un distributeur (51, 52) à commande indépendante est activé.

13. Podium mobile selon l'une des revendications précédentes, **caractérisé en ce qu'**aucune jambe du châssis (11) du véhicule ne se trouve entre deux vérins hydrauliques (33, 34) disposés côte à côte dans un plan vertical transversal au sens de marche du véhicule ou de la remorque (1).

14. Podium mobile selon l'une des revendications précédentes, **caractérisé en ce qu'**au moins un câble (21, 22) dans la zone du toit (15) dans le sens ou le sens contraire au sens de marche du véhicule ou de la remorque (1) est passé du panneau avant au panneau arrière (19, 20) du véhicule ou de la remorque (1) en question, en particulier le long de chevrons (66) de l'ossature portante (18) de la construction (2).

15. Podium mobile selon l'une des revendications précédentes, **caractérisé en ce que** de deux câbles (21 ; 22) d'une paroi rabattable (3 ; 4), un câble est passé du panneau avant au panneau arrière (19, 20) du véhicule ou de la remorque (1) en question dans le sens ou le sens contraire au sens de marche du véhicule ou de la remorque (1), mais pas l'autre, et que les deux sont enroulés autour de poulies de renvoi de palan (40, 41) d'une poutre (39) commune, s'étendant horizontalement, réglable verticalement.

Fig.1

EP 2 848 467 B1

Fig.2

Fig.3

EP 2 848 467 B1

Fig.4

Fig.5

Fig.6

33a 57a 56a   58b 33b 57b 56b        34a 62a 61a   63b 34b 62b 61b

58a

55a                    55b

59                                    64

51                                    52

53

50

54

48

49        45        46

47

EP 2 848 467 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 7300136 U